Europäisches Patentamt

(19) **European Patent Office**

**Office européen des brevets**

(11) Publication number: **0 073 088**
**A2**

(12) # EUROPEAN PATENT APPLICATION

(21) Application number: **82300188.8**

(22) Date of filing: **14.01.82**

(51) Int. Cl.³: **F 01 K 25/10**
**F 17 C 9/04, H 02 J 3/34**

(30) Priority: **20.08.81 GB 8125476**

(43) Date of publication of application:
**02.03.83 Bulletin 83/9**

(84) Designated Contracting States:
**DE FR NL**

(71) Applicant: **ASEA Limited**
**Fanum House 48, Leicester Square**
**London WC2H 7L2(GB)**

(72) Inventor: **Reeve, Brian Robert**
**18, Langbury Lane Ferring**
**Worthing Sussex(GB)**

(74) Representative: **Newby, Raymond Laurence et al,**
**J.Y. & G.W. Johnson Furnival House 14 18 High Holborn**
**London WC1V 6DE(GB)**

(54) Obtaining energy from cryogenic fluids.

(57) A plant for converting a cryogenic fluid into gas, comprises a container (1) for the cryogenic fluid, means such as a pipe (2) and a pump (3) for supplying the fluid from the container (1) to a vaporising plant (5) for converting the cryogenic fluid into a gas stream at super-atmospheric pressure, means (6, 12) for supplying the gas stream to the inlet of a gas expander (16) which includes a rotor (18) drivable by the gas stream, which rotor (18) comprises an output drive shaft (22), an alternating current generator (28) arranged to be driven by the shaft (22) and a voltage and frequency converter (32) having its input side connected to the electrical output of the generator (28) and its output side connected to an electrical power network (15). The converter (32) is of the kind which, over a predetermined range of the speed of rotation of the generator (28), delivers at its output side electric power at a voltage and frequency which at all times conform to the voltage and frequency of the network (15).

## Obtaining energy from cryogenic fluids

This invention relates to a method of obtaining useful electrical energy from a cryogenic fluid. The invention also includes a plant employing the method.

In the handling of large volumes of natural gas it is frequently necessary to liquefy the gas for the purpose of transporting it or storing it. This necessitates compressing and cooling the gas to extremely low temperatures, for example to -60°C in the case of natural gas liquid (NGL), which contains mainly propane and butane, or to -160°C in the case of liquid natural gas (LNG), which contains mainly methane. A large amount of energy is required to operate the refrigeration plant used to produce such liquid gas. For example, in the case of LNG, the energy required for its conversion into the liquid state represents about 17 per cent of the energy content of the liquid.

Before such liquefied gases can be usefully employed, they must be passed through vaporisers and a pressure let-down system to restore them to gaseous form at approximately ambient temperature and a pressure not far removed from atmospheric pressure. In the vast majority of plants for handling liquefied gases in this way, no attempt is made to obtain any useful energy from the process of converting the liquefied gas to gaseous form. There are some plants in Japan in which, as part of the conversion process, the liquefied gas is used to cool deep freeze chambers for food storage, but this does not result in a particularly efficient recovery of the pressure energy content of the liquefied gas.

The present invention aims to provide an improved method of obtaining energy from a cryogenic fluid, and to a plant which utilises the method.

According to one aspect of the invention, a method of obtaining energy from a cryogenic fluid stored in a container at superatmospheric pressure and sub-zero temperature, comprises the steps of passing the fluid through a vaporising plant to produce a gas stream at superatmospheric pressure, supplying said gas stream to the inlet of a gas expander in which the gas stream is employed to drive a rotor having an output shaft, employing rotation of the output shaft of the gas expander to drive an alternating current generator, and delivering the electrical output of the generator to the input side of a voltage and frequency converter which, within predetermined limits of the speed of rotation of the generator, delivers from its output side an electrical output to an electrical power network at a voltage and a frequency which at all times conform to the voltage and frequency of said network.

According to a further aspect of the invention, a plant for converting a cryogenic fluid into gas comprises a container for the cryogenic fluid, means for supplying the fluid from the container to a vaporising plant for converting the cryogenic fluid into a gas stream at superatmospheric pressure, means for supplying said gas stream to the inlet of a gas expander which includes a rotor drivable by the gas stream, said rotor comprising an output drive shaft, an alternating current generator arranged to be driven by said output drive shaft, and a voltage and frequency converter having its input side connected to the electrical output of the generator and its output side connected to an electrical power network, said converter being of the kind which, over a predetermined range of the speed of rotation of the generator, delivers at its output side electric power at a voltage and frequency which at all times conform to the voltage and frequency of said network.

In use of the method or plant in accordance with the invention, some re-liquefaction of the gas may occur at the outlet side of the gas expander. This re-liquefied gas may be returned to the vaporising plant or it may be led to a holding tank where it is allowed to vaporise prior to supply to a consumer with the main gas flow from the outlet side of the gas expander.

Known gas expanders of a kind suitable for use in the method and plant in accordance with the invention have a maximum safe speed of rotation of about 4,200 r.p.m. In operation of the method in accordance with the invention, the mechanical and electrical inertia of the system comprising the generator, the converter and the electrical power network can ensure that the rotor of the gas expander does not exceed a speed of say 4,000 r.p.m., which is a satisfactory safeguard during normal operation. However, in the event of an electrical faulure in the aforesaid system, it is possible that owing to the consequent reduced inertia of the system, the speed of rotation of the rotor of the gas expander may build up to a dangerous level. To guard against this possibility, the plant may comprise valve means which is linked to the converter of the system so that immediately an electrical fault is detected at the converter, said valve means is actuated to divert the high pressure gas stream leaving the vaporising plant to a conventional pressure let-down system. The converter may comprise means which enables it to maintain connection between the generator and the power network for a short time, for example up to 4 seconds after the occurrence of an electrical fault in the system, so that at least commencement of the actuation of the valve means to divert the gas stream to the pressure let-down system has commenced prior to the disconnection of the generator from the power network. In the event of a through fault developing in the converter, a short time-rated resistance load bank may be switched across the generator terminals to prevent breakaway of the gas expander/generator system.

Known gas expanders of a kind suitable for use in the method and plant in accordance with the present invention are not designed to be self-starting and the preferred method of starting is to set the rotor of the gas expander in rotation prior to introduction of the gas stream. It is, of course, a simple matter to provide auxiliary means for effecting this initial rotation of the rotor of the gas expander, but a particularly convenient way of doing this is to employ the alternating generator as a motor for driving the rotor. To this end, the converter comprises means enabling it to supply power (approximately 10 per cent of the rated load) from the electrical power network to the generator at a voltage and frequency which result in the generator acting temporarily as a motor and driving the rotor of the gas expander.

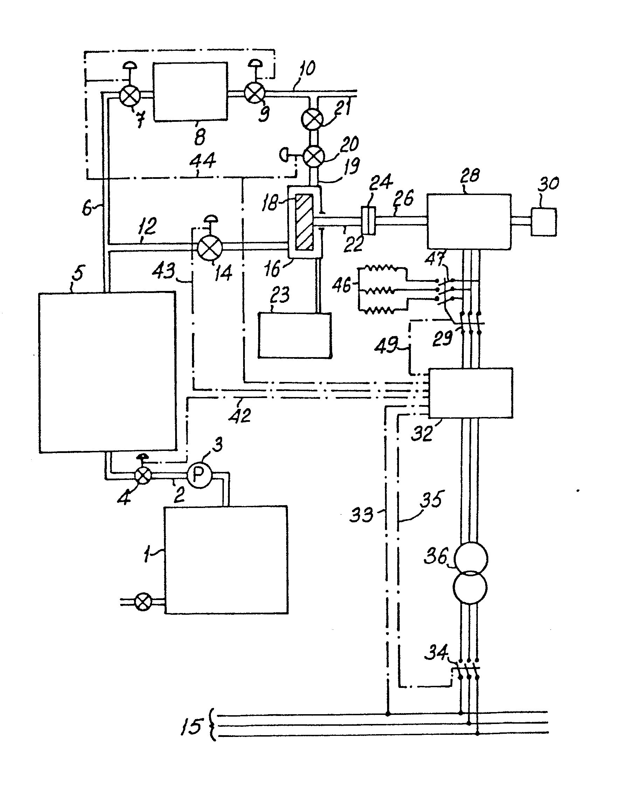

The invention will now be described in greater detail, by way of example, with reference to the accompanying drawing, the single Figure of which is a schematic diagram of a plant in accordance with the invention.

The drawing shows a plant for converting LNG into gas at ambient temperature and a pressure close to atmospheric pressure. The plant comprises a storage vessel 1 for the LNG, which is connected via a pipe 2, including a pump 3 and a shut-off valve 4, to a plant 5 for vaporising the LNG into a high pressure gas stream which leaves the plant 5 via a pipe 6. The pipe 6 leads via a shut-off valve 7 to a conventional pressure let-down system 8, the outlet side of which is connected via a shut-off valve 9 to a pipe 10 which leads the gas to a gas consumer circuit (not shown).

A branch pipe 12 from the pipe 6 leads via a shut-off valve 14 to the inlet of a cryogenic gas expander 16. The latter comprises a rotor 18 which can be driven by the gas stream from the plant 5. After passing through the gas expander 16 and imparting most of its pressure energy content to the rotor 18, the gas issuing from the expander 16 is led via a pipe 19, including a shut-off valve 20 and a pressure control valve 21, to the pipe 10.

The rotor 18 has an output shaft 22 connected via a coupling 24 to the drive shaft 26 of a 3-phase alternating current generator 28 with an excitation system 30. The electrical output of the generator 28 is supplied, via a circuit breaker 29, to the input side of a frequency converter 32, the output side of which is connected, via a circuit breaker 34, to a 3-phase supply network 15. A transformer 36 may be required between the converter 32 and the supply network 15, depending on the voltage of the network.

The converter 32 is controlled, in known manner, by signals transmitted to it from the network 15 via a line 33, so that its voltage and frequency at all times match the voltage and frequency of the network 15 (or of the input side of the transformer 36 when provided) independent of the speed of rotation of the generator 28 within a wide range of speed of rotation of the latter. For example, if the generator 28 is a 2-pole machine having a synchronous speed of 3,000 r.p.m., the converter 32 should be capable of providing a substantially constant output voltage at a substantially constant frequency within a range of speeds of rotation of the generator 28 matching the operational speed range of the rotor 18 which, in the case of some commercially available cryogenic gas expanders, may be from 2,000 to 4,000 r.p.m. For higher speeds it would be necessary to introduce a reduction gear between the gas expander and the generator, which, for example, may replace the coupling 24.

In operation of the above-described plant, the valves 4, 7 and 9 are opened, the valves 14 and 20 are closed and the pump 3 is set in operation to pump LNG from the vessel 1 to the vaporising plant 5. The high pressure gas stream leaving the plant 5 via the pipe 6 has its pressure reduced in the let-down system 8 and the gas leaving the latter is led away via the pipe 10. When the gas stream from the vaporising plant 5 has built up to a power flow state, the circuit breaker 34 is closed and the control system of the converter 32 is adjusted so that power is supplied to the generator 28 from the network 15 for the purpose of driving the generator 28 as a motor and setting the rotor 18 of the gas expander in rotation. When the base speed of the gas expander is reached (e.g. 2,000 r.p.m.), the valves 7 and 9 are closed and the valves 14 and 20 are opened so that the high pressure gas stream from the plant 5 flows via the branch pipe 12 to the gas expander 16. After a short period the rotor 18 of the gas expander 16 produces a torque in excess of the torque provided by the synchronous drive system. When this torque is established, a signal is sent to the control system of the converter 32 to reverse the power flow of the converter, and power generation is established. The gas expander 16, now driven solely by the high pressure gas stream from the plant 5, increases the speed of the generator 28 up to its maximum load condition.

The gas which leaves the gas expander 16 at a considerably lower pressure compared with the gas fed to the gas expander, passes to the pipe 10. Any gas that re-liquefies at the downstream side of the rotor 18 is led to a holding tank 23. This liquid gas may be returned to the vaporising plant 5 or it may be allowed to vaporise in the holding tank, after which it is fed to the pipe 10.

In normal use of the plant, the electrical and mechanical inertia of the system formed by the generator 28, the converter 32, the transformer 36 and the power supply network 15 is sufficient to prevent over-speeding of the rotor 18 of the gas expander 16. However, in the event of an electrical failure developing in this system, there is a danger that opening of the circuit breaker 34 may lead to over-speeding of the shafts 22, 26. To prevent this, the control system of the converter 32 is designed to delay opening of the circuit breaker 34, in the event of a fault arising, for a short period, for example 3 seconds, and at the same time to send electrical signals via lines 43 and 44 to effect closing of the valves 14 and 20 and opening of the valves 7 and 9. This diverts the gas stream from the expander 16 to the pressure let-down system 8 and prevents over-speeding of the shafts 22 and 26. In the event of a through fault occurring in the converter 32, a resistive short time-rated load 46 is immediately switched across the generator output terminals by a circuit breaker 47. The circuit breaker 47 is coupled with the circuit breaker 29 so that when the latter is closed, the circuit breaker 47 is simultaneously opened, and _vice_ _versa_. Closing of the circuit breaker 47 and simultaneous opening of the circuit breaker 29 are initiated by a signal over a line 49 from the control system of the converter 32. Upon operation of the circuit breakers 29 and 47 in this manner, the control system of the converter 32 initiates closing of the valves 14 and 20 and opening of the valves 7 and 9, as described above. In the event of a failure of the network 15, a signal is sent via a line 35 from the network 15 to the control system of the converter 32 to initiate operation of the circuit breakers 29 and 47 as described above. At the same time, the control system of the converter 32 sends a signal via a line 42 to close the valve 4 and cut-off the supply of LNG to the vaporising plant 5.

In one embodiment of the plant shown in the drawing, the cryogenic gas expander 16 was capable of delivering an output of 17 MW at a speed of rotation of the shaft 22 of about 3,600 r.p.m. The generator 28 was a 2-pole turbo designed synchronous machine, type GTL 1050 CP made by ASEA AB. of Västerås, Sweden, and described in ASEA's pamphlet No. OK 13-104E. This generator has an output of 21250 kVA at a voltage of 15 kV ± 5% and a frequency of from 47 to 60 Hz (corresponding to speeds of rotation of from 2,800 to 3,600 r.p.m.). The excitation system 30 consisted of an asynchronous generator, type MDE 500C made by ASEA AB. having an output of 210 kW, the excitation of this asynchronous generator being controlled by a 3-phase a.c. thyristor converter, type YQND made by ASEA AB. and described in ASEA's pamphlet No. YT 374-001E. The converter 32 consisted of a thyristor rectifier/inverter equipment comprising a d.c. thyristor rectifier connected by a d.c. link to an a.c. thyristor inverter, the rectifier and inverter each being a six-pulse bridge unit of the type YRTC 16-1450-3 made by ASEA AB. and described in ASEA's pamphlet No. YT 272-101E. This converter had an output power of 17 MW, an input voltage of 15 kV, and an output voltage to match the voltage of the power network 15 (or the transformer 36 when provided) at a frequency which automatically followed the network frequency. Using this equipment it is estimated that up to 70 per cent of the pressure energy of the LNG in the storage vessel 1 can be usefully recovered as electrical energy delivered to the network 15. For example, with a flow rate of 100 tons of LNG per hour it is possible to supply up to 7000 kWh of energy to the network 15.

CLAIMS

1. A method of obtaining energy from a gas stream at superatmospheric pressure which has been derived from a cryogenic fluid stored in a container (1) at superatmospheric pressure and sub-zero temperature by passing the fluid through a vaporising plant (5), characterised by the steps of supplying said gas stream to the inlet of a gas expander (16) in which the gas stream is employed to drive a rotor (18) having an output shaft (22), employing rotation of the output shaft (22) of the gas expander (16) to drive an alternating current generator (28), and delivering the electrical output of the generator (28) to the input side of a voltage and frequency converter (32) which, within predetermined limits of the speed of rotation of the generator (28), delivers from its output side an electrical output to an electrical power network (15) at a voltage and a frequency which at all times conform to the voltage and frequency of said network (15).

2. A plant for converting a cryogenic fluid into gas, comprising a container (1) for the cryogenic fluid, and means (2, 3) for supplying the fluid from the container (1) to a vaporising plant (5) for converting the cryogenic fluid into a gas stream at superatmospheric pressure, characterised by means (6, 12) for supplying said gas stream to the inlet of a gas expander (16) which includes a rotor (18) drivable by the gas stream, said rotor (18) comprising an output drive shaft (22), an alternating current generator (28) arranged to be driven by said output drive shaft (22), and a voltage and frequency converter (32) having its input side connected to the electrical output of the generator (28) and its output side connected to an electrical power network (15), said converter (32) being of the kind which, over a predetermined range of the speed of rotation of the generator (28), delivers at its output side electrical power at a voltage and frequency which at all times conform to the voltage and frequency of said network (15).

3.    A plant according to claim 2, characterised in that it comprises valve means (7, 14) for directing the gas stream issuing from said vaporising plant (5) either to said gas expander (16) or to a pressure let-down system (8).

4.    A plant according to claim 3, characterised in that said converter (32) is connected to said network (15) via a circuit breaker (34), and the control system of the converter (32) comprises means for initiating opening of said circuit breaker (34) in the event of an electrical fault developing in said generator (28) , said converter (32), or said network (15).

5.    A plant according to claim 4, characterised in that the control system of the converter (32) comprises means for initiating actuation of said valve means (7, 14) to divert said gas stream from said gas expander (16) to said pressure let-down system (8), in the event of an electrical fault developing in said generator (28), said converter (32), or said network (15).

6.    A plant according to claim 5, characterised in that the control system of the converter (32) comprises means enabling it to maintain said circuit breaker (34) closed for a short time after the occurrence of said electrical fault, whereby commencement of the actuation of said valve means (7, 14) to divert said gas stream to the pressure let-down system (8) has commenced prior to opening of said circuit breaker (34).

7.    A plant according to any of claims 2 to 6, characterised in that said converter (32) is a thyristor rectifier/inverter equipment comprising a d.c. thyristor rectifier connected by a d.c. link to an a.c. thyristor inverter.

8.    A plant according to any of claims 2 to 7, characterised in that said generator (28) is drivable as a motor with current supplied from said network (15) via said converter (32), whereby said gas expander (16) can be set in rotation prior to being driven by said gas stream.

9. A plant according to any of claims 2 to 8, characterised in that it comprises means for returning re-liquefied gas from the outlet of said gas expander (16) to said vaporising plant (8) or to a holding tank (23) for subsequent vaporisation.

10. A plant according to any of claims 2 to 9, characterised in that it comprises a resistance load bank (46) connectible across the terminals of said generator (28) in the event of a through fault developing in said converter (32).